# EUROPÄISCHE PATENTSCHRIFT

(11) **EP 1 693 604 B1**
(45) Veröffentlichungstag und Bekanntmachung des Hinweises auf die Patenterteilung: **20.02.2008**
(21) Anmeldenummer: 05027140.2
(22) Anmeldetag: 13.12.2005
(51) Int. Cl.: F16H 63/32

(54) **Schaltanordnung mit einer Schaltgabel**
Shift assembly with a shift fork
Dispositif de changement de vitesse avec une fourchette de commande

(30) Priorität: 16.02.2005 DE 102005006973
(43) Veröffentlichungstag der Anmeldung: 23.08.2006
(73) Patentinhaber: Schaeffler KG, 91074 Herzogenaurach (DE)
(72) Erfinder: Krämer, Klaus, 91460 Baudenbach (DE); Kohn, Peter, 91074 Herzogenaurach (DE)

(56) Entgegenhaltungen:
- EP-A- 0 967 419
- DE-A1- 10 126 437
- DE-A1- 10 309 407
- DE-A1- 19 926 785

## Beschreibung

### Gebiet der Erfindung

Die Erfindung betrifft eine Schaltanordnung für ein Zahnräderwechselgetriebe mit einem Schaltglied und einer in eine Schaltmuffe eingreifenden Schaltgabel, die aus einer auf dem Schaltglied angeordneten Führung mit einem Führungsloch, dessen Ausformung komplementär zum Schaltglied ist, und einem Schaltgabelgrundkörper besteht, wobei der Schaltgabelgrundkörper gegenüberliegende Gabelenden aufweist, entsprechend dem Oberbegriff des Anspruches 1.

### Hintergrund der Erfindung

In manuellen oder automatisierten Getrieben sind zwischen zwei Gangrädern, die drehbar auf einer Getriebewelle gelagert sind, ein Synchronkörper und eine Schaltmuffe angeordnet. Die Schaltmuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Gangs wird die Schaltmuffe in axialer Richtung auf eines der Gangräder verschoben, bis die Innenverzahnung in eine am Gangrad angebrachte Kupplungsverzahnung eingreift. Die Innenverzahnung der Schaltmuffe steht dann sowohl mit der Kupplungsverzahnung als auch mit der Außenverzahnung des Synchronkörpers in Eingriff. Die Schaltgabel hat die Aufgabe, eine axiale Bewegung von einem Schaltgestänge auf die Schaltmuffe zu übertragen. Dabei ist die Schaltgabel axial verschiebbar auf einer Schaltschiene gelagert und greift mit Mitnehmern in eine Führungsnut der Schaltmuffe ein.

Zunehmend gewinnen aus Blech hergestellte Schaltgabeln an Bedeutung, da diese sich kostengünstig und materialsparend herstellen lassen. Der Schaltgabelgrundkörper ist zumeist ein durch Kaltumformen von Blech hergestelltes Formteil. Das Formteil ist gabelförmig mit zwei zueinander beabstandeten Gabelenden ausgeführt. Die Schaltgabeln der betrachteten Gattung weisen eine Führung mit einem in der Regel zylindrisch ausgebildeten Führungsloch auf, welche auf einer Schaltschiene, Schaltstange oder auf einem ähnlichen Schaltglied sitzt und somit eine Schaltanordnung bilden. Es gibt Schaltgabeln, die längs- und zum Teil auch schwenkbeweglich auf den vorgenannten Schaltgliedern angeordnet sind. Weiterhin gibt es Schaltgabeln, die fest auf diesen Schaltgliedern sitzen und deshalb mit dem Schaltglied zusammen relativ zu und in einem Schaltgetriebe beweglich sind.

Führungen mit einem Festsitz auf einem der Schaltglieder sind mit einem vollständig durch die Führung hindurch verlaufenden Loch in Form eines Durchgangsloches versehen. Das Führungsloch verläuft alternativ dazu nur teilweise und damit in der Form eines Sacklochs. Das Durchgangsloch fungiert als ein Gleitsitz auf dem Schaltglied. Alternativ nimmt das Durchgangsloch ein Gleitlager, beispielsweise in der Ausführung einer Gleitbuchse aus Kunststoff, oder ein Wälzlager, z. B. mit Kugeln oder Rollen, auf. Die Führungen liegen in beliebigen Ausführungsformen und Querschnitten, z. B. in der Form eines Hohlprofils mit rechteckigem Querschnitt bzw. eines Hohlprofils mit innen zylindrischem und außen mit beliebigem Querschnitt oder als hohlzylindrische Hülse, vor.

Die Verbindung zwischen dem Schattgabelgrundkörper aus Blech und der Führung ist beispielsweise in der gattungsgemäßen DE 103 09 407 A1 über einen Nocken hergestellt. Der Nocken ist als Verbindungsglied zwischen dem Schaltgabelgrundkörper und der Führung und/oder als Versteifungsglied für die Anbindung des Schaltgabelgrundkörpers an die Führung vorgesehen. Als Verbindungsglied sieht er ausreichend Material zur sicheren Befestigung des Schaltgabelgrundkörpers, z. B. durch Schweißen, an der Führung bzw. an dem Schaltgabelgrundkörper vor. Der Nocken versteift die Schaltgabel an der Anbindung der in der Regel relativ dünnwandigen Schaltgabelgrundkörper gegen elastische und plastische Verformungen aus Betätigungskräften an der Schaltgabel. Die Führung ist in durch eine Ringnaht an den Augen mit dem Schaltgabelgrundkörper verschweißt. Weitere Alternativen zu einer Schaltgabel sind in DE 101 25 098 A1 beschrieben. Dort ist zunächst eine Schaltgabel vorgesehen, bei der die Führung und eine Basis zusammen als eine Einheit einteilig und separat zum Schaltgabelgrundkörper ausgebildet sind und dann im weiteren eine Schaltgabel, bei der die Führung, die Basis und der Schaltgabelgrundkörper jeweils als Einzelteile hergestellt und anschließend miteinander verbunden sind. Die Komponenten der Schaltgabeln sind aus Blech gefertigt.

Die Konstruktionen der Schaltgabeln nach dem vorher beschriebenen Stand der Technik erweisen sich unter hohen Belastungen, insbesondere an der Anbindung des Schaltgabelgrundkörpers zu der Führung, als nicht steif genug. Insbesondere in Schaltrichtung ist die Steifigkeit nicht zufriedenstellend. Oft werden daher derartige, insbesondere aus Dünnblech hergestellte Schaltgabeln mit zusätzlichen Versteifungen durch Rippen, Sicken oder ähnlichem versehen oder verstärkt. Die Anzahl der Einzelteile und/oder der Aufwand für die Herstellung derartiger Schaltgabeln ist relativ hoch. Die Schaltgabeln müssen aufgrund von Positionierungstoleranzen zwischen den Einzelteilen vor dem Fügen und aufgrund des Wärmeverzuges der dünnwandigen Blechbauteile nach dem Fügen aufwändig gerichtet und auf ihre Funktionsmaße justiert werden. Insbesondere der Laserschweißprozess selbst ist aufwändig und zeitintensiv.

Damit die beschriebenen Schaltanordnungen die notwendige Haltbarkeit aufweisen, ist der Schaltgabelgrundkörper der Schaltgabeln häufig beschichtet. Mit den beschriebenen Schaltanordnungen des Standes der Technik ist es aller-Mit den beschriebenen Schaltanordnungen des Standes der Technik ist es allerdings nicht möglich, einen Schaltgabelgrundkörper mit einer Beschichtung in Form einer Plattierung mittels Laserschweißen an das Schaltglied anzubinden, da die Plattierung verbrennen würde und festigkeitsmindernde Einschlüsse und Poren entstünden.

### Zusammenfassung der Erfindung

Der Erfindung liegt daher die Aufgabe zugrunde, die geschilderten Nachteile zu vermeiden und somit eine einfach zu fertigende Schaltanordnung von hoher Steifigkeit mit einer Schaltgabel in Leichtbauweise zu schaffen, wobei die Schaltgabel eine Plattierung aufweisen kann.

Diese Aufgabe ist nach dem kennzeichnenden Teil des Anspruchs 1 dadurch gelöst, dass der Schaltgabelgrundkörper Gabelflanken aufweist, die die Führung auf ihrer gesamten Länge zumindest abschnittsweise umgreifen. Die Schaltgabel ist dabei über diese Gabelflanken fest mit der Führung verbunden. Die in Richtung des Schaltglieds gesehene Länge der Führung entspricht damit dem inneren Abstand der beiden Gabelflanken. Insbesondere kann auf einen schwierig herzustellenden Nocken, der quer zur Rotationsachse einer als Hohlzylinder ausgebildeten Führung hervorsteht, verzichtet werden, weil die Anbindung der Gabelflanken ausschließlich an die Führung selbst erfolgt, die damit die Funktion einer Basis übernimmt. Ebenfalls vorteilhaft ist die sich dabei ergebende Gewichtsersparnis. Die Gabelflanken sind als Auskröpfungen ausgebildet, die die Führung von außen umgreifen. Dabei erweisen sich Auskröpfungen, die eine möglichst breite Anstützung zulassen, als besonders vorteilhaft, da sie eine Verringerung der Spannungen in dem Schaltgabelgrundkörper bewirken.

Die separat gefertigten Teile Schaltgabelgrundkörper und Führung können miteinander in Eingriff und zueinander ausgerichtet und radial Eine Auskröpfung, die der Form der Führung angepasst ist, ermöglicht eine besonders gleichmäßige Kraftverteilung. Für das Positionieren der Schaltgabel ist es zudem von Vorteil, wenn die Führung einen kreiszylindrischen Umfang aufweist und die Auskröpfungen kreissegmentartig mit einem der Führung entsprechenden Radius ausgebildet sind.

Die Form der Führung ist nahezu beliebig; besonders zweckmäßig ist eine Führung in Ringform mit einem Führungsloch. Sie ist in besonders vorteilhafter Weise ein Formteil, das beispielsweise durch Gesenkformen bzw. Druckumformen hergestellt ist. Die Führung wird dabei aus einem Rohling durch Kaltumformen gefertigt. Bevorzugt ist das Verfahren Fließpressen und dabei wiederum eine Kombination der bekannten Verfahren Quer- und Rückwärtspressen. Dabei ist das Führungsloch der Form des Schaltglieds angepasst. Eine spanabhebende Nach- bzw. Feinbearbeitung der Führung ist aufgrund der hohen Präzision von Fließpressteilen nicht oder nur in Ausnahmefällen nötig.

Die Führung ist entweder mit dem Schaltglied kraft-, form- oder stoffschlüssig verbunden, dazu kann sie beispielsweise verpresst, verschweißt oder verstiftet sein, oder das Führungloch nimmt ein Lager auf, wenn die Führung beweglich auf dem Schaltglied angeordnet ist.

Auf den axialen Stirnflächen ist die Führung mit Schweißwarzen versehen. Diese Anordnung ist der Schweißwarzen ermöglicht den Einsatz eines Punktschweißverfahrens zum festen Verbinden der Führung mit dem Schaltgabelgrundkörper. Dabei werden die Gabelflanken des Schaltgabelgrundkörpers in axialer Richtung mit der Führung verschweißt. Es ist also kein Laserschweißen durch den Schaltgabelgrundkörper erforderlich, weswegen eine auf der der Schaltmuffe zugewandten Seite vorhandene Beschichtung, beispielsweise in Form einer Plattierung, keinen Schaden nimmt. Das Punktschweißverfahren ist zudem schnell und kostengünstig.

Die erfindungsgemäße Anbindung der Schaltgabel an das Schaltglied ermöglicht die Verwendung von spanlos hergestellten Schaltgabeln, insbesondere Schaltgabeln, die aus Dünnblech hergestellt sind, dessen Stärke weniger als 4mm beträgt. Ebenso ist es möglich, dass das Dünnblech der Schaltgabel plattiert ist, wobei sich beispielsweise Messing als Plattiermaterial eignet. Diese Plattierung kann vor der Anbindung der Schaltgabel an das Schaltglied erfolgen und braucht für das dauerhafte Verbinden von Schaltgabel und Führung nicht entfernt zu werden.

Das Verfahren zum Verbinden des Schaltgabelgrundkörpers mit der Führung besteht aus drei Schritten: In einem ersten Schritt wird die Führung beispielsweise durch Fließpressen hergestellt und auf ihrer axialen Seite mit Schweißpunkten versehen. In einem zweiten Schritt werden die Führung und der Schaltgabelgrundkörper fest miteinander verbunden, indem der Schaltgabelgrundkörper über die Führung geschoben wird. Bei diesem Vorgang wird der Schaltgabelgrundkörper idealerweise leicht aufgeweitet. Danach wird der Schaltgabelgrundkörper radial in die gewünschte Position verschoben und ausgerichtet, so dass in einem letzten Verfahrensschritt die Führung und die Gabelflanken des Schaltgabelgrundkörpers durch Punktschweißen fest miteinander verbunden werden.

### Kurze Beschreibung der Zeichnungen

Die Erfindung wird nachfolgend anhand von Ausführungsbeispielen näher erläutert. Es zeigen:
- Figur 1: eine perspektivische Ansicht einer erfindungsgemäßen Schaltanordnung mit einer Schaltgabel aus Blech sowie einer Führung und einer Schaltschiene,
- Figur 2: eine weitere perspektivische Ansicht der Schaltanordnung der Figur 1,
- Figur 3: einen Längsschnitt der Schaltanordnung der Figur 1,
- Figur 4: einen Querschnitt der Schaltanordnung der Figur 1 entlang der Schnittlinie IV-IV,
- Figur 5: einen perspektivische Ansicht einer weiteren Schaltanordnung.

### Detaillierte Beschreibung der Zeichnungen

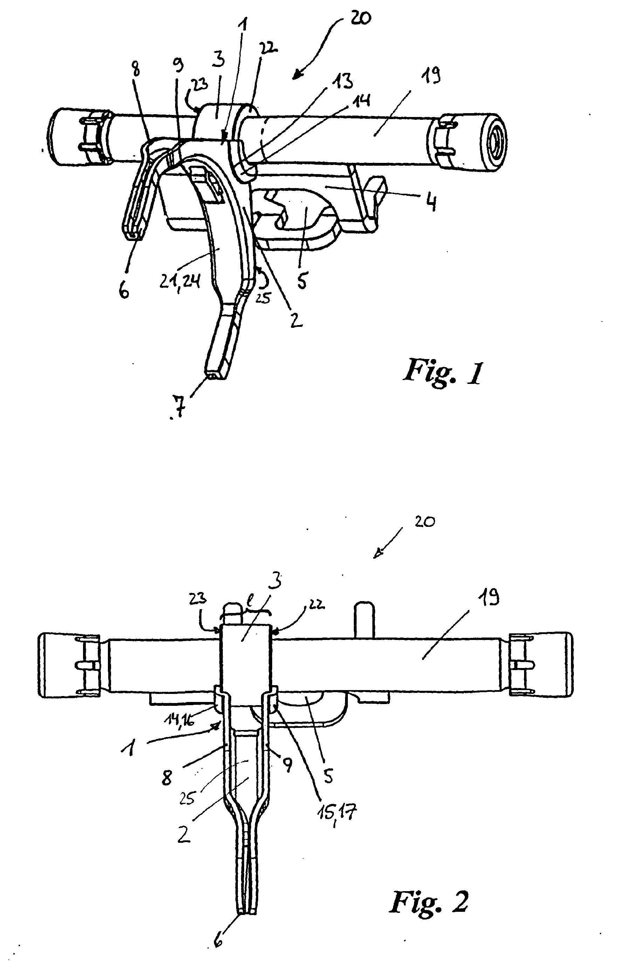

Das Ausführungsbeispiel einer Schaltanordnung 20 gemäß der Figuren 1 und 2 weist eine Schaltgabel 1 mit einem Schaltgabelgrundkörper 2 und einer Führung 3, ein Schaltglied 19, sowie einen Schaltarm 4 auf. Der Schaltarm 4 ist mit einem Schaltmaul 5 versehen und an der Führung 3 befestigt. Der Schaltgabelgrundkörper 2 ist ein gabelförmig ausgebildetes Blechformteil mit Gabelenden 6 und 7, die eine Schaltmuffe (nicht dargestellt) umgreifen. Der Schaltgabelgrundkörper 2 ist so verformt, dass auf der der Schaltmuffe abgewandten Seite 25 von den Gabelenden 6 und 7 wegweisende Rippen 8 und 9 in Richtung der Führung 3 abgewinkelt sind. Die Rippen 8 und 9 liegen sich längs zur Führung 3 zueinander parallel ausgerichtet gegenüber, so dass der Schaltgabelgrundkörper 2 an der Anbindung zur Führung 3 einen U-förmigen Längsschnitt aufweist. Im Bereich dieser Anbindung bilden die Rippen 8 und 9 Gabelflanken 16 und 17 mit jeweils einer Ausrundung 13, welche den Schaltgabelgrundkörper 2 formschlüssig an die Führung 3 positionieren. Auf der der Schaltmuffe zugewandten Seite 24 des Schaltgabelgrundkörpers 2 zwischen den Gabelenden 6 und 7 ist eine Plattierung 21 angeordnet.

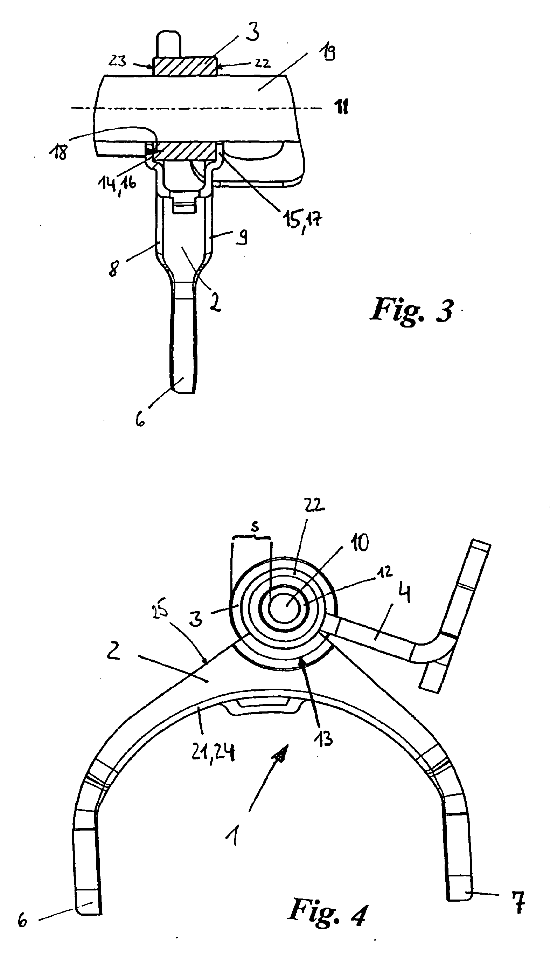

Aus den Figuren 3 und 4 geht hervor, dass die Führung 3 ein Führungsloch 10 aufweist und mit dem Führungsloch 10 um eine gemeinsame Rotationsachse 11 rotationssymmetrisch ausgebildet ist. Dabei führt das Führungsloch 10 längs durch die Führung 3 hindurch. Die Führung 3 ist massiv ausgebildet und ein umfangsseitig um das Führungsloch 10 in sich geschlossener Hohlkörper mit einer Wandstärke s, wobei die Wand dicker ist als die Blechdicke des Blechs, aus dem der Schaltgabelgrundkörper 2 hergestellt ist. Die Führung 3 besitzt in axialer Richtung Stirnseiten 22, 23. An den Öffnungen der Führung 3 ist das Führungsloch 10 mit Fasen 12 versehen. Die Fasen 12 erleichtern wahlweise das Einführen des Schaltglieds 19, wie einer Schaltstange, oder eines Gleit- bzw. Wälzlagers.

In Ausgestaltung der Erfindung gemäß Figuren 2 und 3 besitzt die Ausrundung 13 einen Innenradius r, der dem halben Außenumfang der hohlzylindrischen Führung 3 entspricht. Der Schaltgabelgrundkörper 2 sind im Bereich der Ausrundung 13 die Gabelflanken 16, 17 als Auskröpfungen 14 und 15 ausgebildet. Über diese ist der Schaltgabelgrundkörper 2 mit dem Führungsrohr 3 über Schweißpunkte 18 fest verbunden.

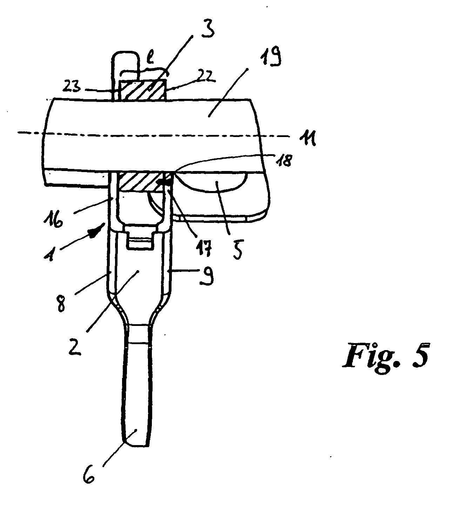

Figur 5 schließlich stellt eine zweite Ausführungsform der erfindungsgemäßen Schaltgabel 1 dar. Die Führung 3 weist dabei eine Länge I auf, die genau dem inneren Abstand der beiden Gabelflanken 16, 17 entspricht. Der Schaltgabelgrundkörper 2 braucht in diesem Fall im Bereich der Gabelflanken 16, 17 nicht aufgeweitet zu werden, sondern die Gabelflanken 16, 17 können direkt nach dem Positionieren über die Schweißpunkte 18 mit der Führung 3 stoffschlüssig verbunden werden. Die Herstellung der Schaltgabel 1 wird damit vereinfacht.

Die Anbindung des Schaltgabelgrundkörpers 2 an das Schaltglied 19 erfolgt über die Führung 3. Dazu wird die Führung 3 in einem ersten Verfahrensschritt axial mit Schweißpunkten 18 in Warzenform versehen. Die Schweißpunkte 18 werden dabei gleichmäßig zumindest in dem Bereich der Stirnseiten 22, 23 der Führung 3 angeordnet, der von den Gabelflanken 16, 17 im zweiten Verfahrensschritt überdeckt wird. Im zweiten Schritt werden die Gabelflanken 16, 17 des Schaltgabelgrundkörpers 2 so über die Stirnseiten 22, 23 der Führung 3 geschoben, dass eine formschlüssige Verbindung entsteht und der Schaltgabelgrundkörper 2 leicht aufgeweitet wird. Der Schaltgabelgrundkörper 2 wird danach radial positioniert, sofern er nicht schon die gewünschte Position aufweist oder die Führung 3 und das Schaltglied 19 rotationssymmetrisch sind. In einem letzten Verfahrensschritt werden die Schweißpunkte 18 mittels eines Punktschweißverfahrens abgeschmolzen und somit Schaltgabelgrundkörper 2 und Führung 3 stoffschlüssig miteinander verbunden. Die Einwirkung des Schweißprozesses erfolgt dabei in axialer Richtung, so dass nicht durch die der Schaltmuffe zugewandten Seite 24 des Schaltgabelgrundkörpers 2 geschweißt wird. Damit wird auch die Einwirkung des Schweißprozesses auf eine mögliche Plattierung 21 minimiert.

### Bezugszeichen

- 1: Schaltgabel
- 2: Schaltgabelgrundkörper
- 3: Führung
- 4: Schaltarm
- 5: Schaltmaul
- 6: Gabelende
- 7: Gabelende
- 8: Rippe
- 9: Rippe
- 10: Führungsloch
- 11: Rotationsachse
- 12: Fase
- 13: Ausrundung
- 14: Auskröpfung
- 15: Auskröpfung
- 16: Gabelflanke
- 17: Gabelflanke
- 18: Schweißpunkt
- 19: Schaltglied
- 20: Schaltanordnung
- 21: Plattierung
- 22: Stirnseite
- 23: Stirnseite
- 24: der Schaltmuffe zugewandte Seite
- 25: der Schaltmuffe abgewandte Seite 25

- l: Länge der Führung
- s: Wandstärke

## Patentansprüche

1. Schaltanordnung für ein Zahnräderwechselgetriebe mit einem Schaltglied (19) und einer in eine Schaltmuffe eingreifenden Schaltgabel, die aus einer auf dem Schaltglied angeordneten Führung mit einem Führungsloch (10), dessen Ausformung komplementär zum Schaltglied ist, und einem Schaltgabelgrundkörper besteht, wobei der Schaltgabelgrundkörper gegenüberliegende Gabelenden aufweist, welche die Schaltmuffe umgreifen, **dadurch gekennzeichnet, dass** der Schaltgabelgrundkörper (2) auf der von den Gabelenden (6, 7) abgewandten Seite (25) Gabelflanken (16, 17) aufweist, welche die Führung (3) zumindest abschnittsweise umgreifen, wobei der innere Abstand der Gabelflanken der Länge der Führung entspricht, die Gabelflanken (16, 17) jeweils axial stirnseitig mit der Führung (3) verschweißt sind und die Gabelflanken (16, 17) Auskröpfungen (14, 15) aufweisen, wobei die Kontur der Auskröpfungen (14,15) zumindest abschnittsweise komplementär zu der der Führung (3) ist.

2. Schaltanordnung nach Anspruch 1, **dadurch gekennzeichnet, dass** die Führung (3) als Hohlzylinder und die Auskröpfungen (14, 15) kreissegmentförmig ausgebildet sind.

3. Schaltanordnung nach Anspruch 1, **dadurch gekennzeichnet, dass** der Schaltgabelgrundkörper (2) aus Blech ist.

4. Schaltanordnung nach Anspruch 3, **dadurch gekennzeichnet, dass** die Blechstärke weniger als 4mm beträgt.

5. Schaltanordnung nach Anspruch 1, **dadurch gekennzeichnet, dass** der Schaltgabelgrundkörper (2) auf der der Schaltmuffe zugewandeten Seite (24) mit einer Plattierung (21) versehen ist.

6. Schaltanordnung nach Anspruch 1, **dadurch gekennzeichnet, dass** die Führung (3) ein Fließpressteil ist.

7. Schaltanordnung nach Anspruch 1, **dadurch gekennzeichnet, dass** die Führung (3) axial mit Schweißpunkten (18) versehen ist.

8. Verfahren zur Herstellung einer Schaltanordnung nach Anspruch 1, **dadurch gekennzeichnet, dass** in einem ersten Verfahrensschritt die Führung (3) axial mit Schweißpunkten (18) versehenen wird, dass in einem zweiten Verfahrensschritt der Schaltgabelgrundkörper (2) im Bereich der Gabelflanken (16, 17) aufgeweitet wird, indem dieser über die Führung (3) geschoben wird, dass in einem optionalen, dritten Verfahrensschritt der Schaltgabelgrundkörper (2) radial positioniert und ausgerichtet wird und dass in einem letzten Verfahrensschritt die Schweißpunkte (18) mittels Punktschweißen abgeschmolzen werden und dadurch die Führung (3) und der Schaltgabelgrundkörper (2) miteinander fest verbunden werden.

## Claims

1. Gear shifting arrangement for a variable speed gear transmission comprising a gearshift member (19) and a gearshift fork engaging into a gearshift sleeve that is made up of a guide arranged on the gearshift member, said guide comprising a guide hole (10) having a shape complementary to the gearshift member, and further comprising a gearshift fork base body which has opposing fork ends that engage around the gearshift sleeve, **characterised in that**, on the side (25) turned away from the fork ends (6, 7), the gearshift fork base body (2) comprises fork flanks (16, 17) that engage at least partially around the guide (3), the inner distance between the fork flanks corresponds to the length of the guide, the fork flanks (16, 17) are welded at axial front ends to the guide (3) and the fork flanks (16, 17) comprise right-angled bends (14, 15), and that the contour of the right-angled bends (14, 15) is at least partially complementary to that of the guide (3).

2. Gear shifting arrangement according to claim 1, **characterised in that** the guide (3) is configured as a hollow cylinder and the right-angled bends (14, 15) have a circular segment shape.

3. Gear shifting arrangement according to claim 1, **characterised in that** the gearshift fork base body (2) is made out of sheet metal.

4. Gear shifting arrangement according to claim 3, **characterised in that** the sheet metal thickness is less than 4 mm.

5. Gear shifting arrangement according to claim 1, **characterised in that**, on the side (24) turned towards the gearshift sleeve, the gearshift fork base body (2) is provided with a metal coating (21).

6. Gear shifting arrangement according to claim 1, **characterised in that** the guide (3) is an extrusion moulded part.

7. Gear shifting arrangement according to claim 1, **characterised in that** the guide (3) is provided in axial direction with welding spots (18).

8. Method of making a gear shifting arrangement according to claim 1, **characterised in that**, in a first step of the method, the guide (3) is provided in axial direction with welding spots (18), in a second step of the method, the gearshift fork base body (2) is widened in the region of the fork flanks (16, 17) by pushing it over the guide (3), in an optional, third step of the method, the gearshift fork base body (2) is positioned and oriented in radial direction, and in a last step of the method, the welding spots (18) are melted by spot welding, so that the guide (3) and the gearshift fork base body (2) are firmly connected to each other.

## Revendications

1. Agencement de changement de vitesse pour une transmission par engrenages, ledit agencement comprenant un membre (19) de changement de vitesse et une fourchette de changement de vitesse qui s'engage dans un manchon changement de vitesse, ce manchon de changement de vitesse étant constitué d'un guide qui est agencé sur le membre de changement de vitesse et possède un trou (10) de guidage dont la forme est complémentaire au membre de changement de vitesse, et ledit manchon étant constitué, en plus, d'un corps de base de fourchette de changement de vitesse qui comprend des extrémités de fourchette opposées qui s'engagent autour du manchon de changement de vitesse, **caractérisé en ce que** le corps de base (2) de fourchette de changement de vitesse comprend, du côté (25) détourné des extrémités (6, 7) de fourchette, des flancs (16, 17) de fourchette qui entourent le guide (3), au moins partiellement, l'écart intérieur entre les flancs de fourchette correspondant à la longueur du guide, **en ce que** les flancs (16, 17) de fourchette sont soudés, à chaque fois, du côté axial frontal au guide (3) et que les flancs (16, 17) de fourchette comprennent des coudes angulaires (14, 15) dont le contour est complémentaire, au moins partiellement, au celui du guide (3).

2. Agencement de changement de vitesse selon la revendication 1, **caractérisé en ce que** le guide (3) est configuré sous la forme d'un cylindre creux, et les coudes angulaires (14, 15) ont la forme de segments circulaires.

3. Agencement de changement de vitesse selon la revendication 1, **caractérisé en ce que** le corps de base (2) de fourchette de changement de vitesse est fait en tôle métallique.

4. Agencement de changement de vitesse selon la revendication 3, **caractérisé en ce que** l'épaisseur de la tôle est inférieure à 4 mm.

5. Agencement de changement de vitesse selon la revendication 1, **caractérisé en ce que**, du côté (24) faisant face au manchon de changement de vitesse, le corps de base (2) de fourchette de changement de vitesse est muni d'un revêtement métallique (21).

6. Agencement de changement de vitesse selon la revendication 1, **caractérisé en ce que** le guide (3) est une pièce formée par extrusion.

7. Agencement de changement de vitesse selon la revendication 1, **caractérisé en ce que** le guide (3) est muni en direction axiale de points (18) de soudage.

8. Méthode de fabriquer un agencement de changement de vitesse selon la revendication 1, **caractérisée en ce que**, dans un premier pas de la méthode, le guide (3) est muni en direction axiale de points (18) de soudage, dans un second pas de la méthode, le corps de base (2) de fourchette de changement de vitesse est élargi dans la région des flancs (16, 17) de fourchette en le poussant sur guide (3), dans un troisième pas facultatif de la méthode, le corps de base (2) de fourchette de changement de vitesse est positionné et orienté en direction radiale, et que, dans un dernier pas de la méthode, les points (18) de soudage sont fondus par soudage par points, de sorte que le guide (3) et le corps de base (2) de fourchette de changement de vitesse sont fixement reliés, l'un à l'autre.
